# EUROPEAN PATENT APPLICATION

(11) **EP 0 822 523 A2**
(43) Date of publication of application: **04.02.1998**
(21) Application number: 97304985.1
(22) Date of filing: 08.07.1997
(51) Int. Cl.: G07C 9/00

(54) **Signature scanner**

(30) Priority: 03.08.1996 GB 9616385
(71) Applicant: NCR International, Inc., Dayton, Ohio 45479 (US)
(72) Inventor: McNamara, Michael, Portobello, Edinburgh EH15 2BD, Scotland (GB)
(74) Representative: Irish, Vivien Elizabeth

(57) **Abstract**

A signature scanner has a secure housing (10) with an aperture (14) exposing part (18) of a paper strip (19,22) for signature by a normal pen (28). After signature, a motor (36) moves the signature past a thickness sensor (30) which detects any overlaid signature and if so provides an alarm signal. The signature is scanned by a signature scanner (32) and an image transmitted to a central record point for validation. A printer (34) prints e.g. the time and date adjacent each signature.

## Description

This invention relates to signature scanners, especially to scanners used for remote financial transactions.

When a financial transaction is carried out in a remote environment i.e. the parties involved are not at the same geographical position, it is often a requirement that a signature is provided as proof of identity, the signature then being scanned electronically and compared with a record signature at a control centre.

Such an arrangement may be used in self service environments,(for example an automated bank branch if a user is requesting a loan or a mortgage) when a range of users with varying degrees of writing ability will be encountered. To capture a signature electronically, known methods include the use of a pressure pad or a glass display panel, but the feeling of signing on such a pad or panel is different from signing on paper. This may be unacceptable to some users, who would be more comfortable with the familiar act of signing on paper.

In an alternative arrangement, a paper form is provided for signature, and the signed form is scanned electronically, but there is a risk that a photocopied or stolen copy of a signature has been placed on the form.

It is the object of the invention to provide a signature scanner for remote transactions which is acceptable to users but has a high level of security.

According to the invention, there is provided a signature scanner characterized by a secure housing having an aperture on an upper surface; means to support an area of a paper strip for exposure in the aperture; a thickness sensor; an electronic image scanner; means to move said area of the paper strip into the secure housing and past the thickness sensor and the image scanner; and means to provide an alarm signal if the thickness sensor detects an over-thickness of paper.

Optionally the signature scanner is connected by communication means, such as the public switched telephone network (PSTN) or a cable network, to a control centre at which record copies of user signatures are stored.

Optionally the scanner also comprises printer means arranged to print related information adjacent a signature; such information may include the time and date of provision of the signature.

The invention will now be described by way of example only with reference to the accompanying drawings in which:-
Figure 1 is a perspective view of a signature scanner according to the invention;
Figure 2 is a vertical section through the scanner shown in Figure 1; and
Figure 3 illustrates the electrical interconnection of the scanner parts.

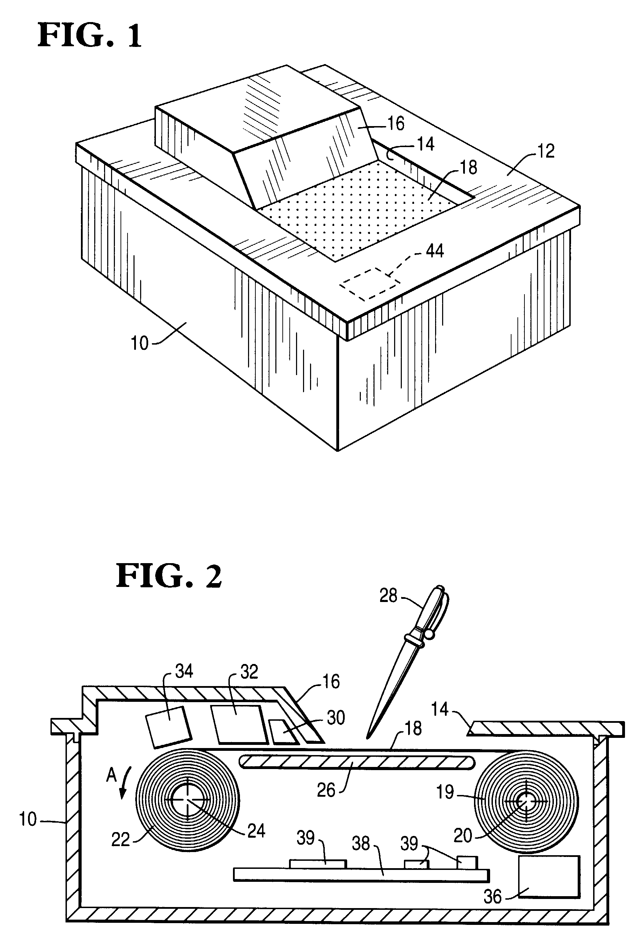

In Figure 1, a signature scanner comprises a secure housing 10 with a horizontal upper surface 12 having a central aperture 14 and an adjacent cowl part 16. Within the aperture an area 18 of paper is exposed.

In Figure 2 it can be seen that the paper area 18 is part of a paper strip running between a blank roll 19 on a support spindle 20 and a recorded roll 22 on a support spindle 24. Below the aperture 14 is a backing plate 26 which supports the paper area 18.

A user can sign the paper area 18 with a conventional pen 28 and can feel confident that his or her normal signature is being provided.

Within the cowl part 16 and immediately adjacent the aperture 14 is a paper thickness sensor 30 of known type. Adjacent the sensor 30 is an electronic signature scanner 32 of known type, and adjacent the recorded roll 22 is a printer 34. The housing 10 also contains an electric motor 36 connected by mechanical means not shown to the support spindle 24, and arranged to move the paper in the direction shown by the arrow A.

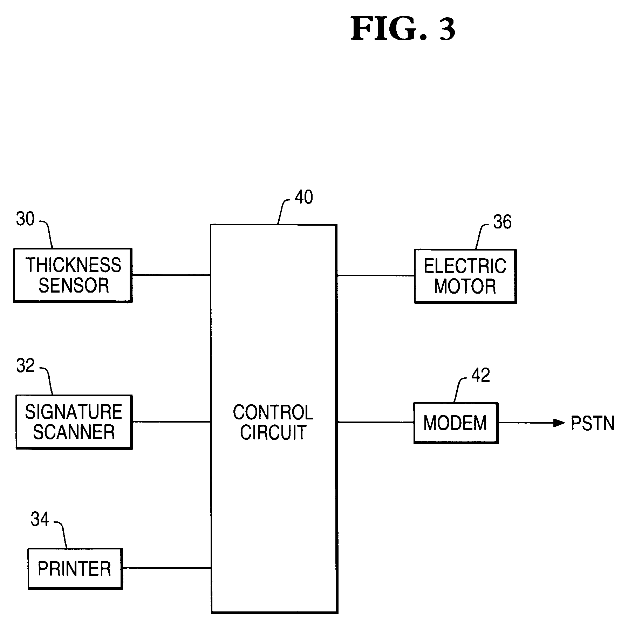

Also within the housing is a PCB 38 carrying components 39 forming a control and communications circuit 40, which as shown in Fig.3 is connected to the thickness sensor 30, the scanner 32, the printer 34, the motor 36, and through a modem 42 to the public switched telephone network (PSTN).

In use, the illustrated device is positioned at a remote self service selling environment, such as an automated bank branch and is connected by the PSTN to a control centre (not shown).

In operation, after the user has signed on the paper area 18, the motor 36 operates spindle 24 to move the signature past the thickness sensor 16. If the sensor 16 detects additional paper thickness, indicating an additional layer of paper with e.g. a photocopied signature, an alarm signal is sent to the control circuit 40 which relays it via the PSTN 40 to the central ordering unit which bars the transaction. If required, a local audible alarm could also be provided (not illustrated).

If there is no additional paper thickness, the signature is moved past the signature scanner 32 which relays an electronic image to the central ordering unit for comparison with a record signature previously provided by the user; the comparison will usually be made electronically but can be made by eye. If the signature is considered valid, the central ordering unit allows the transaction to proceed, and the scanned signature is entered electronically onto a centrally-held order form.

For each signature, the printer 34 prints on the paper roll 24 adjacent the signature any relevant details, such as the time and date of signature. The recorded roll 22 can provide proof of signature at a later date if required.

The operation of the motor 36 to move the paper past the thickness sensor 30 and the signature scanner 32 may be controlled by the central ordering unit through the PSTN and the modem 42. Alternatively, the upper surface 12 of the housing can be provided with a button or similar input device 44, shown dotted in Fig.1, for the user to indicate that the signature is complete, and to start the motor 36.

In a variation, the housing can be provided with a key pad to allow input of other details, such as the item number of goods offered for sale, to provide a complete remote ordering transaction. The item number can then be printed adjacent the signature by the printer 34. Alternatively or additionally a Personal Identification Number (PIN) could be entered.

The description above is based on an arrangement in which the financial institution operating the system incorporating a scanner according to the invention already has a centrally-stored example of the user's signature, so that the scanned signature can be compared with the stored signature.

In a variation (not illustrated), the scanner could incorporate a Smart Card reader, and be modified to make a local comparison of the signature on the card and the signature provided on the scanner.

In another variation, the signature provided on the scanner could be the first signature provided by the user; the record in the scanner could then be compared with subsequent signatures. In a further variation, a video camera could be provided close to the scanner to capture an image of the user, for future proof of identity.

## Claims

1. A signature scanner characterized by a secure housing (10,12) having an aperture (14) on an upper surface; means (26) to support an area (18) of a paper strip (19,22) for exposure in the aperture; a thickness sensor (30); an electronic image scanner (32); drive means (36) to move said area of the paper strip into the secure housing and past the thickness sensor and the signature scanner; and circuit means (40) to provide an alarm signal if the thickness sensor (30) detects an over-thickness of paper.

2. A signature scanner according to claim 1, characterized by connection means (42) for connection to communication means (PSTN).

3. A signature scanner according to claim 1 or claim 2, characterized by printer means (34) arranged to print related information adjacent a signature on the paper strip (22).

4. A signature scanner according to any preceding claim, characterized by a manual input device (44) to initiate operation of the drive means (36) when a signature is completed.

5. A signature scanner according to any preceding claim, characterized by means to sense the signature on a Smart Card, and means to compare the Smart Card signature with the signature sensed by the image scanner.
